# EUROPEAN PATENT APPLICATION

(11) **EP 4 299 448 A1**
(43) Date of publication of application: **03.01.2024**
(21) Application number: 22182313.1
(22) Date of filing: 30.06.2022
(51) Int. Cl.: B64F 1/20

(54) **VISUAL LANDING AID FOR AN AIRCRAFT APPROACHING A LANDING SITE**

(71) Applicant: Lilium eAircraft GmbH, 82234 Wessling (DE)
(72) Inventor: LITVINS, Andrejs, 82234 Wessling (DE)
(74) Representative: Grünecker Patent- und Rechtsanwälte PartG mbB

(57) **Abstract**

A visual landing aid (1) for an aircraft approaching a landing site (L) comprises at least one light-emitting and/or light-reflecting element (2) and a mechanical and/or optical structure (3) for directing the light emitted and/or reflected by the element (2) into a plurality of focused light cones (5) which are positioned next to each other in a grid-like manner along a radiating surface (4) of the mechanical and/or optical structure (3) and together form a navigation light (6), the focused light cones (5) forming the navigation light (6) changing for an observer in the aircraft as a function of a deviation of the aircraft from a target landing approach path. This visual landing aid (1) offers a combined solution for landing navigation in both horizontal and vertical planes. Further, this visual landing aid (1) is scalable and can provide a much higher resolution compared to existing solutions.

## Description

The present invention relates to a visual landing aid for an aircraft approaching a landing site.

Currently, guidance systems are used in commercial aircraft to warn the pilot when the aircraft deviates from its flight path. Guidance systems must maintain a certain level of accuracy, integrity, continuity, and availability during normal flight. Guidance systems used for landing have additional requirements for accuracy, integrity, continuity, and availability. Landing systems typically provide high-precision data on an aircraft's position and deviation from a target landing approach path. However, this high precision requires specialized equipment, which is expensive and is typically time-consuming in installation, calibration/ certification, maintenance and repair.

In addition to markers and navigation and radio location aids, airfield lighting systems play an increasingly important role to guarantee safety during landings for 'eyes out' approaches in challenging landing environments and deteriorated weather conditions.

Where an improved visual guidance of an aircraft should be provided on the approach, the runway must be equipped with a visual approach slope indicator system. Visual approach slope indicator systems are installed at virtually every civil aerodrome. An additional advantage is that they correct any tendency to fly low in heavy rain.

The most used is the Precision Approach Path Indicator (PAPI) system. It consists of four light units showing either red or white light through precision defined angles of approach. Each light unit is set to a different mid angle and below that angle shows red and above shows white. The overall effect is to give a reference to the median angle which is set to the required glide path (usually 3°). The possible combination of the four light sets give five different indications relating to the aircraft position with respect to the required glide path: 1) four white lights: aircraft much too high; 2) three white lights and one red light: aircraft slightly too high; 3) two white lights and two red lights: aircraft on the correct glide path; 4) three red lights and one white light: aircraft slightly too low; 5) four red lights: aircraft much too low.

There is also a special system designed for heliport operations only - Helicopter Approach Path Indicator (HAPI) system. This system consists of a light box that emits four different patterns: 1) flashing green: helicopter above the optimal glide path (too high); 2) constant green: helicopter on the glide path; 3) constant red: helicopter slightly below the optimal glide path (slightly too low); 4) flashing red: helicopter below the optimal glide path (too low). The signal repetition of the flashing pattern must be greater than 2 Hz. In accordance with International Civil Aviation Organization (ICAO) recommendations, the HAPI system shall be capable of providing altitude adjustment at any desired angle between 1 and 12 degrees above the horizon with an accuracy of +/-5 minutes of arc. The angular size of the constant green light ("on glide path") is 45 minutes of arc.

If the heliport is situated in an area where obstacle clearance or noise procedures are prescribed or it is essential to fly a precisely defined track towards the Final Approach and Take-Off (FATO) area, a Visual Alignment Guidance System (VAGS) is used. The VAGS consists of two lights located symmetrically on both sides of a Touchdown and Lift-Off (TLOF) area. However, by means of light beam rotation, the pilot is presented with a sequenced display. When the helicopter is on the extended centerline of the TLOF area, or within 0.45° either side of the centerline, the pilot will see the two lights flashing simultaneously. If the helicopter is off the TLOF centerline by more than 0.45°, up to a maximum of 15°, the pilot will see a delay between the flashes. The two lights will flash with a variable delay (60 to 330 ms) according to the position of the helicopter relative to the centerline. The further the helicopter is from the centerline, the greater the delay. The delay between the two flashes produces a sequence effect, which shows the direction towards the TLOF centerline.

Current state of the art solutions enable determination of the aircraft's position in relationship to glide slope (PAPI/HAPI) and azimuth (VAGS), but their angular resolution is low and can be insufficient for electric Vertical Take-Off and Landing (eVTOL) aircraft in performing landings in highly complex landing environments such as urban environments.

Furthermore, a combined solution for determining the approach path in both planes (PAPI/HAPI and VAGS) requires the pilot to identify indications from each separate system and then estimate the spatial position of the aircraft based on the combination of these identified indications. This represents a tedious and error-prone task for a pilot, especially in the aforementioned critical urban landing zones that eVTOL aircraft must navigate.

Bearing the above in mind, the object of the present invention is to provide a visual landing aid for an aircraft approaching a landing site that is both technically simple and, at first glance, provides high-resolution information about the aircraft's (non)compliance with a defined target approach path.

According to the present invention, this object is achieved by providing a visual landing aid for an aircraft approaching a landing site having the features specified in independent claim 1. Further embodiments and optional features are detailed in the subsequent dependent claims 2 to 15.

More specifically, a visual landing aid for an aircraft approaching a landing site according to the present invention comprises at least one light-emitting and/or light-reflecting element and a mechanical and/or optical structure for directing the light emitted and/or reflected by the element into a plurality of focused light cones which are positioned next to each other in a grid-like manner along a radiating surface of the mechanical and/or optical structure and together form a navigation light, the focused light cones forming the navigation light changing for an observer in the aircraft as a function of a deviation of the aircraft from a target landing approach path.

The essence of the invention is that the light provided by the light-emitting and/or light-reflecting element/elements is divided by means of a mechanical and/or optical structure into a plurality of focused light cones positioned next to each other in the form of a grid. Such a two-dimensional, gridded display of focused light cones has the advantage of showing directly to the observer in the aircraft not only information about the amount of deviation, but also about the direction (angle) of deviation (i.e., both horizontal and vertical) of the aircraft from a predetermined optimal landing approach path, so that effective countermeasures to correct the landing approach path can be initiated in a timely manner. Thus, the visual landing aid creates a simple but effective tool for correcting the landing approach path, especially in critical urban or peri-urban areas where eVTOL aircraft are intended to be used to shorten commuter times and overfly road congestion.

It is particularly preferred in this connection that the navigation light for the observer in the aircraft is located in a center of the radiating surface when the aircraft is on the target landing approach path.

The position of the navigation light (which consists of several adjacent focused light cones) in the center of the radiating surface provides the observer in the aircraft with an intuitive reference visualization that allows him/her to clearly see whether or not the aircraft is following the target landing approach path.

It is also particularly preferred that as the aircraft moves away from the target landing approach path, the position of the observed navigation light moves in the same direction.

Thus, the visual landing aid provides the pilot (observer) in the aircraft with a direct correlation between the amount of deviation (both vertical and horizontal) from the optimal approach path (target landing approach path). The effective range at which the pilot (observer) can determine the approach path depends on the size of the installation and can be increased by increasing the total grid area. The resolution of the deviation angle can be increased by simply increasing the number of cells in the grid.

In a further particularly preferred embodiment, the direction of deviation of the aircraft from the target landing approach path corresponds to a direction of displacement of the navigation light from the center of the radiating surface.

Accordingly, the radiating surface represents a two-dimensional grid, where the vector connecting the center of this grid with the actual position of the navigation light is in the direction in which the actual position of the aircraft deviates both horizontally and vertically from the target approach path. Therefore, it is no longer necessary to check separate systems (such as PAPI/HAPI and VAGS) to determine the deviation in elevation and azimuth angle.

In accordance with yet a further preferred embodiment of the present invention, the structure comprises a plurality of light-guiding elements arranged in a grid defining a plurality of adjacent light-guiding channels, wherein the light-guiding channels each extend from a first opening facing the element to a second opening at the radiating surface, and wherein the second openings each emit a focused light cone, which is either perceivable or not perceivable for the observer in the aircraft, depending on a deviation of the aircraft from the target landing approach path.

The above configuration provides a particularly simple yet effective optical structure (i.e., a structure that manipulates light) for generating from light emanating from the light-emitting and/or light-reflecting element/elements a plurality of focused light cones arranged in a grid-like manner along the radiating surface of the optical structure. Likewise, the light-guiding elements (for example, plates or tubes) form a grid-like structure with a plurality of adjacent light-guiding channels. Focused (narrow) light cones are formed at the second openings from light entering these channels at the first openings. Depending on the position of the observer with respect to a second opening, the focused light cone emerging from this second opening is visible, partially visible or not visible. The second openings with (completely or partially) visible focused light cones are adjacent to each other along the radiating surface and form a navigation light that indicates to the observer in the aircraft the aircraft's current position with respect to the visual landing aid. The radiating surface of the structure thus forms a two-dimensional, screen-like map that can be used to accurately detect and display the position of an aircraft approaching the landing site. The resolution of this map can be easily adjusted by changing the number and/or size of the second openings (grid cell areas).

In the foregoing embodiment, a preferred aspect is where the cross-section of the light-guiding channels continuously increases from the first opening to the second opening.

This increase in cross-section allows the light-emitting and/or light-reflecting element to couple light into each light-guiding channel, even if its total surface area is much smaller than that of the grid-like structure for splitting light into multiple focused light cones.

Also, it is preferable that the structure comprises a plurality of adjacent rows of light-guiding channels, each row in turn consisting of a plurality of adjacent light-guiding channels.

In this way, the light-guiding channels create an array of focused light cones with multiple rows and multiple columns (a two-dimensional array). For the observer in the aircraft, the vertical and horizontal (mis)alignment of the aircraft is immediately apparent from the position of the navigation light in this two-dimensional array.

Further preferably, wherein the light-guiding channels within a row have different inclinations with respect to a plane perpendicular to the radiating surface.

By varying the inclinations of the light-guiding channels, it is possible to appropriately adjust the shape and size of the navigation light, as well as the ideal position (aircraft on the target path) of the navigation light and the amount and direction of the displacement of the navigation light from this ideal position depending on the deviation of the aircraft from the target path.

In particular, it may be provided in this context that within a row the inclination of the light-guiding channels with respect to a plane perpendicular to the radiating surface increases the further the light-guiding channel is away from a center of the row.

Due to the increasing inclination, the further the light-guiding channels are from the center of the respective row, the strongly inclined light cones emanating from the outer channels become visible to the observer in the aircraft only if there is a strong deviation from the target landing approach path in the respective direction. In contrast, the non-inclined or slightly inclined light cones emanating from the center channels remain visible to the observer in the aircraft only when there is no or little deviation from the target landing approach path.

The present invention is schematically illustrated in the accompanying drawings on the basis of an exemplary embodiment and will now be described with reference to these drawings, wherein:
Fig. 1 is a three-dimensional perspective view of a visual landing aid for an aircraft approaching a landing site according to a first embodiment encompassed by the present invention;
Fig. 2 is a side cross-sectional view of the visual landing aid shown in Fig. 1;
Figs. 3a through 3d are views of the visual landing aid from the perspective of an observer in an aircraft approaching the visual landing aid shown in Fig. 1, in the case where the aircraft is on the target landing approach path (Fig. 3a) or deviating from the target landing approach path in different directions (Figs. 3b, 3c, and 3d);
Fig. 4 is a three-dimensional perspective view of a visual landing aid for an aircraft approaching a landing site according to a second embodiment encompassed by the present invention;
Fig. 5 is a front view of the visual landing aid shown in Fig. 4;
Fig. 6 is a side view of the visual landing aid shown in Fig. 4;
Figs. 7a through 7d are views of the visual landing aid and the landing site according to Fig. 4 from the perspective of an observer in an aircraft approaching the landing site, in the case where the aircraft is on the target landing approach path (Fig. 7a) or deviating from the target landing approach path in different directions (Figs. 7b, 7c, and 7d); and
Fig. 8 is a schematic side view of a VTOL aircraft descending to a landing site, adjacent to which is a visual landing aid according to the first embodiment of the present invention shown in Figs. 1 to 3d.

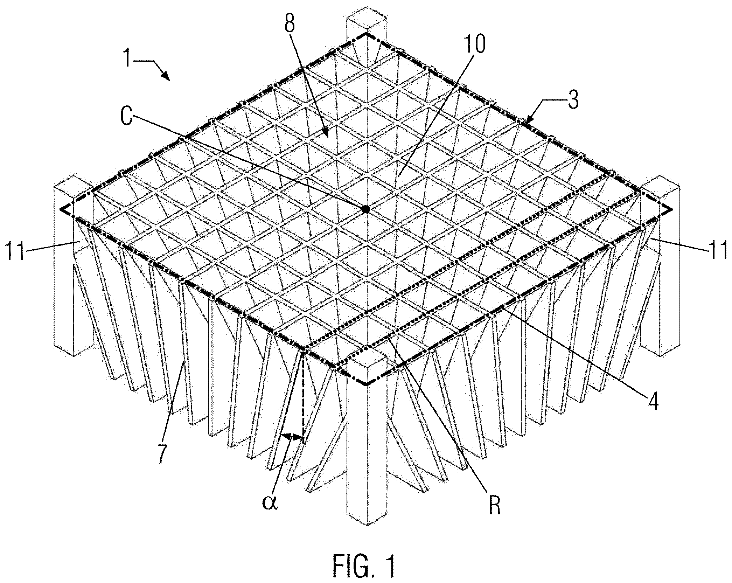

The present invention enables precise landing navigation even in complex (e.g., urban or peri-urban) environments by providing a visual landing aid 1 that can be implemented, for example, in the manner shown in Fig. 1. This embodiment of the visual landing aid 1 according to the invention displays two types of lights to a pilot in an approaching aircraft.

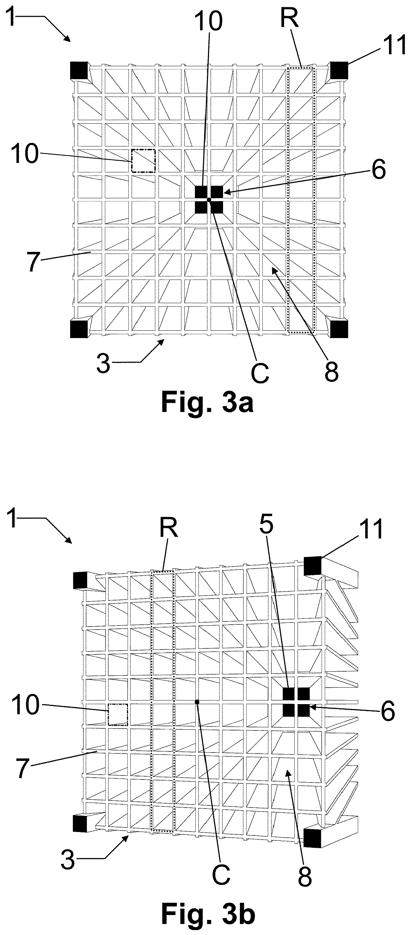

Firstly, the visual landing aid 1 generates a navigation light 6, which is shown in Figs. 3a to 3d respectively from the perspective of the pilot in the aircraft approaching the visual landing aid 1. This navigation light 6 has a certain first color (e.g., green) and signals to the pilot in the approaching aircraft whether, in which direction and to what extent the aircraft deviates from the intended approach path. For this purpose, the navigation light 6 displayed in the visual landing aid 1 is precisely aligned and calibrated with respect to the respective landing site.

Secondly, the visual landing aid 1 has reference lights 11 at its edge, which serve to provide better orientation for the pilot in the approaching aircraft. These reference lights 11 emit light of a certain second color (e.g., red) and a certain third color (e.g., blue). In the illustrated embodiment example, the upper edge of the visual landing aid 1 is marked by two reference lights 11 emitting light with the second color (e.g., red), while the lower edge of the visual landing aid 1 is marked by two reference lights 11 emitting light with the third color (e.g., blue).

The main difference between the two aforementioned types of lights is that the navigation light 6 is generated (with the aid of a mechanical and/or optical structure 3) in such a way that it is composed of discrete focused light cones 5. Each focused light cone 5 is associated with a light-guiding channel 8 and can only be seen from a certain angle of approach. The reference lights 11, on the other hand, not only have a different color than the navigation light 6, but also have a dispersed 360° light spread to be visible from all possible approach angles.

Since the generation of the navigation light 6 is the core of the present invention, this will be explained in more detail below.

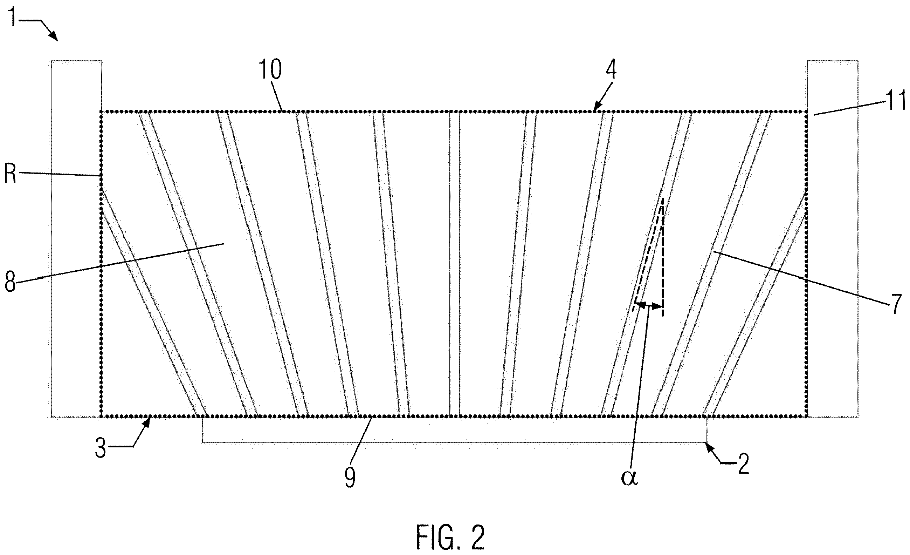

To generate this navigation light 6, an element 2 that emits (e.g., an array of LEDs or other light sources) and/or reflects (e.g., a reflector array) light of the certain first color (e.g., green) is used. In the embodiment shown, the element 2 is planar, although it may have another (three-dimensional) shape. Furthermore, it is emphasized that the use of a single light-emitting and/or light-reflecting element 2, as shown in Fig. 2, is to be understood as exemplary only. Of course, several such elements 2, possibly also elements 2 emitting and/or reflecting light in different colors, may be comprised in the visual landing aid 1 according to the invention.

As shown in Fig. 2, directly on top of this planar element 2 is an optical structure 3 (i.e., a structure 3 that interacts with light) configured to direct the light emitted and/or reflected by the element 2 into a plurality of focused light cones 5 arranged in a grid-like manner that together form the navigation light 6 that indicates to the pilot of the approaching aircraft whether or not it is following the target landing approach path.

This structure 3 for directing the light irradiated by the element 2 is made up of a plurality of light-guiding elements (plates) 7 joined together so as to form a grid with a plurality of rows R of light-guiding channels 8, each row R being composed of multiple light-guiding channels 8 arranged side by side. These light-guiding channels 8 of the grid-like structure 3 each have a first opening 9 located on the surface of the light-emitting and/or light-reflecting element 2. The light is guided through these first openings 9 into the interior of the light-guiding channels 8. At the opposite end, the light-guiding channels 8 each open into a second opening 10 through which the light is emitted into the environment. These second openings 10 are arranged along a radiating surface 5, which is parallel to the surface of the element 2, at uniform intervals, each corresponding to the thickness of a plate (light-guiding element) 7, in a plurality of rows R (see Figs. 3a to 3d).

The light-guiding channels 8 each have a square cross-section, viewed perpendicular to the radiating surface 5 of the structure 3, and in a cross-sectional plane of the structure 3 all light-guiding channels 8 have the same square dimensions. As can be seen in Fig. 2, the cross-sections of the light-guiding channels 8 increase continuously from the first opening 8 to the second opening 10. This allows the light-emitting and/or light-reflecting element 2 to be smaller in area dimension than the radiating surface 4 of the optical structure 3, with the element 2 nevertheless feeding light into all light-guiding channels 8. However, seen as a whole, the optical structure 3 has a constant square cross-section over its entire length from the surface resting on the element 2 to the radiating surface 4.

The second openings 10, which have the same square shape, divide the square radiating surface 5 into several equally sized sub-surfaces in a checkerboard fashion. The light-guiding channels 8 bundle (concentrate) the light emerging from the second openings 10 in each case to such an extent that focused (narrow) light cones 5 are formed which are not visible from every viewing angle of an observer. Accordingly, although focused light cones 5 emerge from each of the second openings 10, a focused light cone 5 emerging from a particular second opening 10 may either be perceived or not perceived depending on the relative position of the observer to that particular second opening 10.

A navigation light 6, which informs the pilot of the relative horizontal and vertical position of the aircraft, is formed by a plurality of such focused light cones 5 arranged side by side in a grid pattern (see Figs. 3a to 3d). The focused light cones 5 of the navigation light 6 correspond to the second openings 10 of the radiating surface 4, the outgoing light of which is visible (in whole or in part) to the observer in the aircraft. However, the other second openings 10 remain unilluminated (i.e., without perceivable light) to the observer in the aircraft because the focused light cones 5 emerging from these second openings 10 are not visible due to the position of the observer relative to the visual landing aid 1.

The effect described above is enhanced by the fact that the light-guiding channels 8 arranged within a row R have different inclinations α with respect to a plane perpendicular to the radiating surface 4. When the focused light cones 5 emerging from the second openings 10 are directed in a direction no longer covered by the observer's field of view due to the inclinations α of the respective light-guiding channels 8, these second openings 10 on the radiating surface 4 of the structure 3 remain unlit for the observer (i.e., without a perceivable light). Only those second openings 10 whose focused light cones 5 are aligned by the inclinations α of the respective light-guiding channels 8 so that they fall within the viewing angle range of the observer are perceived by the observer as discrete lights.

In the present embodiment example, the inclinations α of the light-guiding channels 8 are selected such that within a row R the inclination α of the light-guiding channels 8 with respect to a plane perpendicular to the radiating surface 4 increases the further the light-guiding channel 8 is away from a center of the row R. Consequently, the outer light-guiding channels 8, which are farthest from the center C of the radiating surface 4, have the largest inclinations α with respect to a plane perpendicular to the radiating surface 4. Thus, the farther out the light-guiding channel 8 is located, the more obliquely outward (away from the central axis of the visual landing aid 1) the corresponding focused light cone 5 is directed. For this reason, focused light cones 5 emanating from the second openings 10 of the outer light-guiding channels 8 can only be detected when the observer assumes a position with respect to the visual landing aid 1 that is outwardly displaced with respect to the center C of the radiating surface 4 in the direction of the corresponding outer light-guiding channels 8 (as shown in Figs. 3b to 3d).

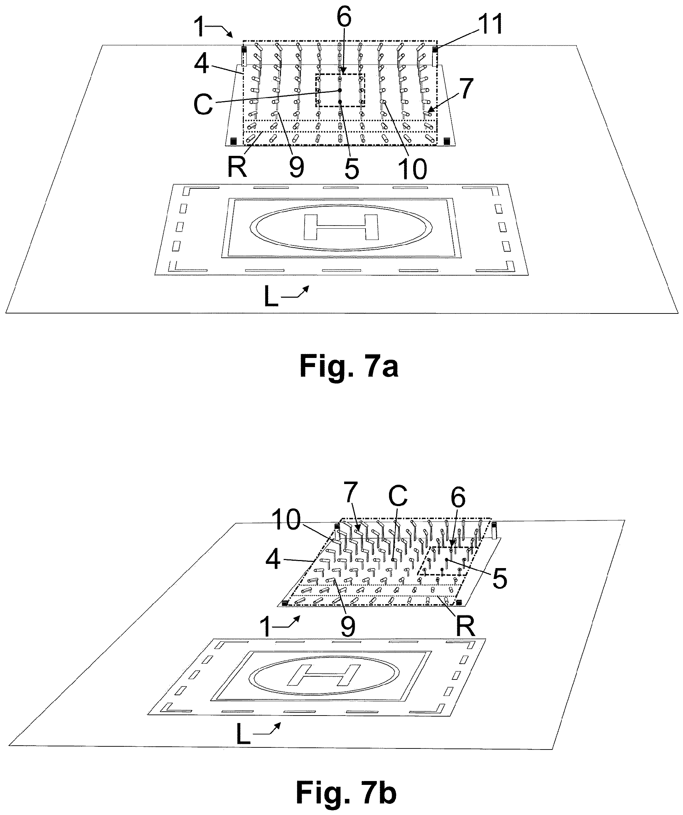

In contrast, of the light-guiding channels 8 arranged in a row R, those closest to the center of the row R have the least or no inclination α with respect to a plane perpendicular to the radiating surface 4. This means, therefore, that the light-guiding channels 8 whose second openings 10 are closest to the center C of the radiating surface 4 radiate their focused light cones 5 approximately along an optimal landing trajectory (target landing approach path). As a result, focused light cones 5 in the second openings 10 located at or immediately around the center C of the radiating surface 4 are detectable by an observer in an aircraft approaching the landing site L only when his or her observation position is aligned with or approximately aligned with this target landing approach path (as in Figs. 3a and 7a). In such an observation position, however, no lights are visible to the observer in each of the outer second openings 10, since the focused light cones 5 emerging here each point obliquely outward, away from the central axis.

Therefore, a suitable configuration of the structure 3, which directs the light coupled from the element 2 into several separate light paths to create discrete focused light cones 5, makes it possible to determine both the distance and the angle of a deviation from a central, ideal position.

The navigation light 6 consists of focused light cones 5 arranged in a grid. The focused light cones 5 in this grid are generated by the arrangement of the light-guiding channels 8 described above in such a way that the navigation light 6 is only visible in the center C of the radiating surface 4 when the observer is on an optimal target landing approach path aligned with the center C of the visual landing aid 1 (Fig. 3a). However, as the observer moves away from the optimal approach path, the navigation light 6 detected by the observer also moves away from the center C. Based on the position of the observed navigation light 6 relative to the reference lights 11 mounted on the edge of the visual landing aid 1, the current approach deviations can be recorded by magnitude and angle.

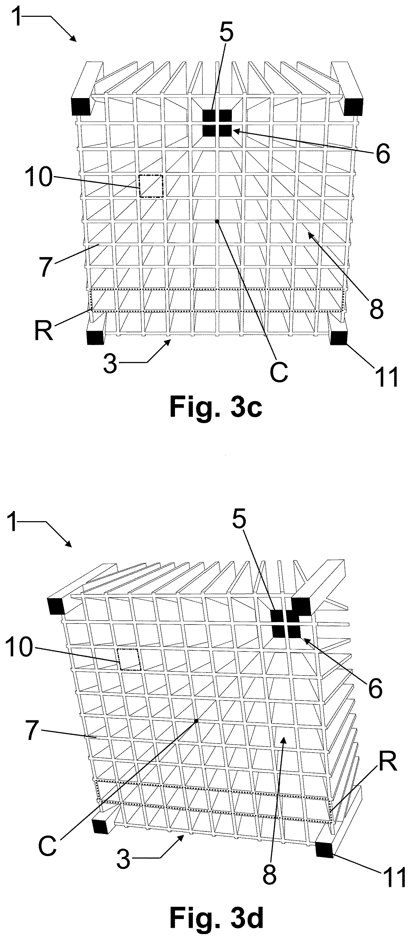

Figs. 3b through 3d show examples of light patterns that an observer might perceive when in an aircraft that deviates from the target landing approach path. A square grid of 10×10 second openings 10 is used to display a navigation light 6, and reference lights 11 are positioned at the edges of this square grid (e.g., red at the top, blue at the bottom). When the observer is on the optimal approach path (target landing approach path), the observed (e.g., green) navigation light 6 appears in the center C of the square grid (see Fig. 3a). If the observer is to the right of the optimal approach path (i.e., offset to the right), the navigation light 6 appears accordingly on the right side of the square grid (see Fig. 3b); if the observer is above the optimal approach path (i.e., too high), the navigation light 6 appears accordingly on the upper side of the square grid (see Fig. 3c); if the observer is both above and to the right of the optimal approach path (i.e., offset to the right and too high), then the navigation light 6 appears accordingly in the upper right corner area of the square grid (see Fig. 3d); and so on ...

As a result, both the magnitude and direction of the deviation from the optimal target landing approach path are virtually transferred to the two-dimensional plane of the radiating surface 4 of the visual landing aid 1 accordingly. This provides an intuitive reference system in a simple manner, and the observer's approach path in relation to the optimal approach path can be accurately determined at a glance and corrected if necessary.

It should be noted that the configurations used in the illustrated embodiment can be adapted to better suit a particular landing approach scenario. For example, the parameters of the grid, the reference lights 11, the colors, the distances and the focused light cones 5 can be adjusted to better support certain landing approaches. For example, the greater the number of second openings 10 and thus of potentially detectable focused light cones 5, the better the resolution of the system (i.e., the observer can more accurately determine the magnitude and angle of the deviation). For example, the greater the distance between the second openings 10 and thus between the potentially detectable focused light cones 5, the greater the range at which the system can be used for landing navigation. Furthermore, different light configurations, such as different colors of the focused light cones 5, can be provided, for example by using multiple elements 2 with different emitted and/or reflected wavelengths. Depending on how far away the focused light cones 5 are from the center C, the focused light cones 5 can appear in different colors, for example. Of course, other colors can also be used for the reference lights 11.

Unlike existing approach procedures that rely on separate approach indicators for slope deviation (e.g., PAPI or HAPI) and azimuth deviation (e.g., VAGS), the proposed system provides for the first time a combined solution for landing navigation in both the horizontal and vertical planes. In addition, the system is scalable and provides much higher resolution of aircraft position in both the horizontal and vertical planes compared to existing solutions, as well as the ability to see at a glance the offset of the landing approach in both the horizontal and vertical planes.

The visual landing aid 1 presented here can be integrated into existing or future landing infrastructures, especially urban or regional eVTOL vertiports, and will require little maintenance and low operating costs due to its technical simplicity.

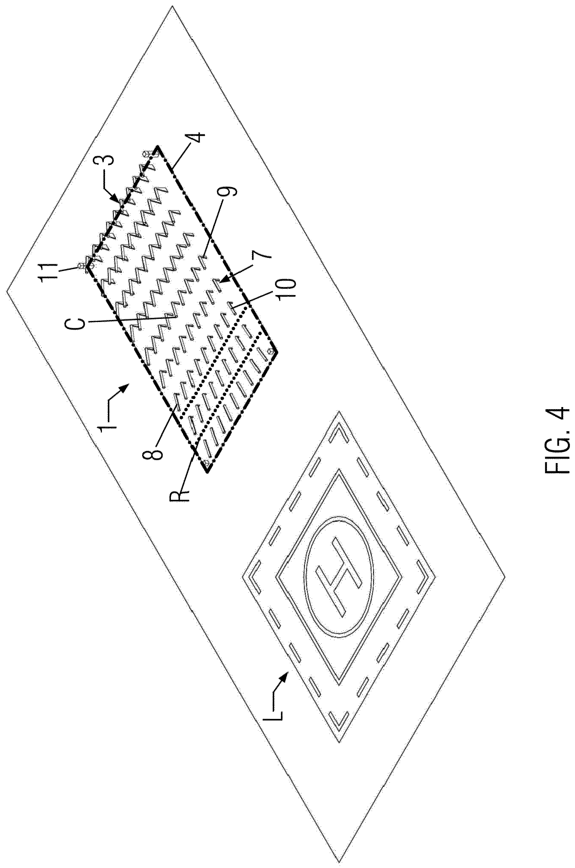

Figs. 4, 5, 6, and 7a to 7d show a second embodiment of the visual landing aid 1 in its potential practical installation as part of a landing infrastructure. To this end, the visual landing aid 1 is in a precisely calibrated installation position, with the center C of the radiating surface 4 lying on an extension of a central longitudinal axis of a landing site L for a VTOL aircraft.

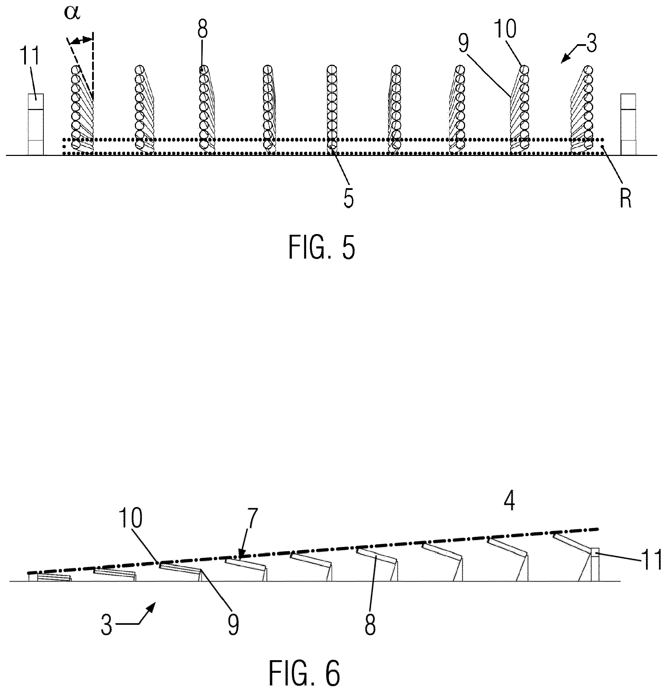

This visual landing aid 1 of the second embodiment differs from that of the first embodiment only with respect to the configuration of the optical structure 3 for generating the focused light cones 5. According to the second embodiment, the optical structure 3 comprises a plurality of light-guiding elements 7 in the form of tubes arranged in a grid-like manner with a plurality of equidistantly spaced rows R of said tubes. These tubes (light-guiding elements) 7 each have a first opening 9 into which light from a light-emitting and/or light-reflecting element (not shown) enters, and a second opening 10 from which light exits in the form of a focused light cone 5. The second openings 10 are distributed in a grid pattern along a radiating surface 4 of the optical structure 3, which is oblique to the horizontal installation surface (see Figs. 5 and 6). That is, within a row of the optical structure 3 extending in a direction away from the landing site L, the distance from a second opening 10 of a tube (light-guiding element) 7 to the horizontal installation surface increases continuously the farther the respective second opening 10 is from the landing site L (see Fig. 6).

As in the first embodiment, depending on the approach path of the aircraft relative to an optimal approach path (target landing approach path) to the landing site L, the navigation light 6, which is formed by a plurality of focused light cones 5 that are adjacent to each other and perceivable to an observer in the approaching aircraft, appears either around the center C of the radiating surface 4 (as in Fig. 7a) or in a direction deviating from the center C of the radiating surface 4 in the same direction in which the aircraft deviates from the optimal approach path (as in Figs. 7b to 7d).

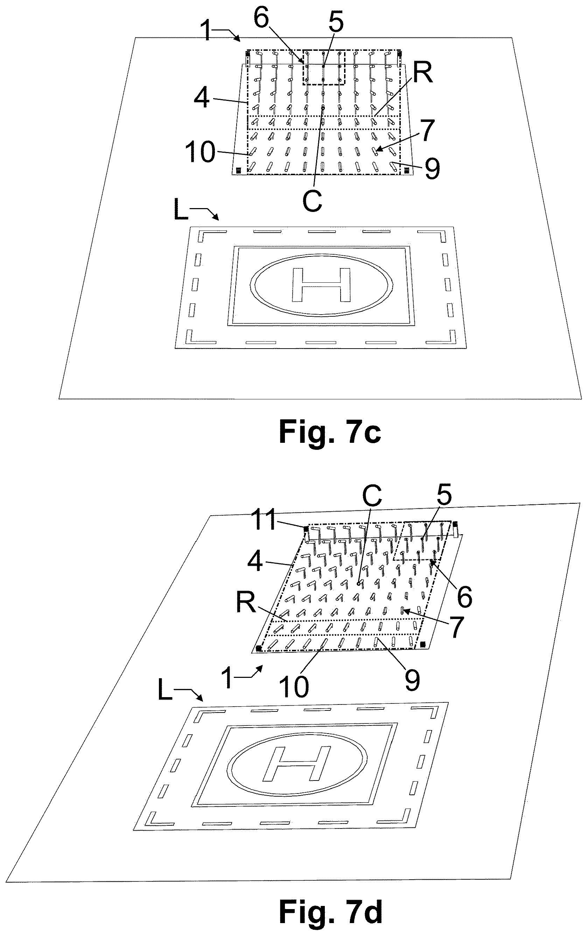

That is, when the aircraft approaching the landing site L is to the right of the target landing approach path (i.e., too far right), the navigation light 6 appears correspondingly in the middle right part of the radiating surface 4 of the optical structure 3 (as shown in Fig. 7b), when the aircraft approaching the landing site L is above the target landing approach path (i.e., too high), the navigation light 6 appears correspondingly in the middle upper part of the radiating surface 4 of the optical structure 3 (as shown in Fig. 7c), when the aircraft approaching the landing site L is both to the right of and above the target landing approach path (i.e., too far right and too high), the navigation light 6 appears correspondingly in the upper right corner part of the radiating surface 4 of the optical structure 3 (as shown in Fig. 7d), and so on ...

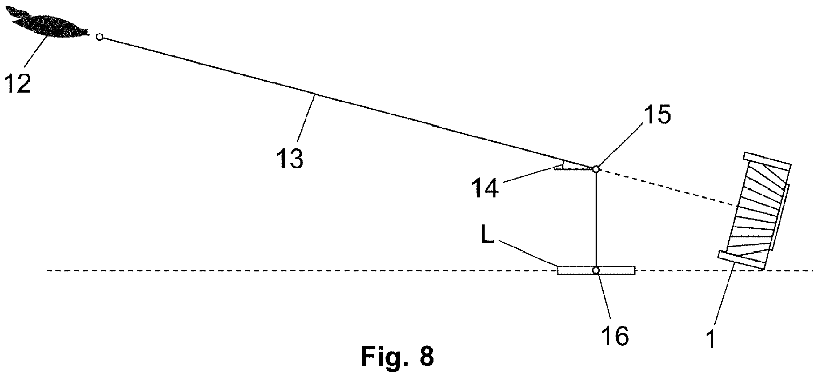

Fig. 8 shows an example of a landing approach of a vertical take-off and landing (VTOL) aircraft 12 to a landing site L, wherein a ground-based visual landing aid 1 is located in the vicinity of the landing site L, which in the example shown in Fig. 8 is configured according to the first embodiment of the visual landing aid 1 shown in Figs. 1 to 3d. Thus, the visual landing aid 1 has a radiating surface 4 that emits light in the form of focused light cones 5 discretely arranged in a two-dimensional grid, wherein a navigation light 6 is formed by a plurality of adjacent focused light cones 6, and the focused light cones 5 forming the navigation light 6 change depending on a deviation of the aircraft 12 from a target landing approach path (see Figs. 3a to 3d).

The gradually increasing inclinations α of the light-guiding channels 8 in this visual landing aid 1 (see Fig. 2) can reach values in the range between 0.5 degrees and 2.5 degrees. The inclinations α are based on the required flight angle path of the aircraft 12. As every aircraft has a different flight angle path, the inclinations α must be aligned to the required flight angle path. The size of the grid (number of light emitting openings in both directions) of the visual landing aid 1 can range from 7x7 to 12x12. The installation width of the visual landing aid 1 can be between 20 m and 30 m.

During the landing approach along the descent path 13, the observer (in particular the pilot) in the VTOL aircraft 12 is able to determine the actual approach angles of the VTOL aircraft 12 relative to the landing site L in both the vertical and horizontal planes based on the observed positions of the focused light cones 5, which form the navigation light 6, along the radiating surface 4 of the visual landing aid 1. In this way, the observer in the VTOL aircraft 12 can determine the deviation of the actual descent path 13 of the aircraft 12 from a predetermined target landing approach path in both directions (horizontal and vertical).

In the example shown, the VTOL aircraft 12 approaches the landing site L along the descent path 13 that corresponds to the predetermined target landing approach path. Consequently, the descent angle 14 also corresponds to a target descent angle (target approach angle in the vertical direction). The mounting location of the visual landing aid 1 relative to the landing site L is calibrated so that the actual descent path 13, which corresponds to the target landing approach path, intersects with the center C of the radiating surface 4 of the visual landing aid 1.

In addition, the visual landing aid 1 is mounted at an angle to the ground so that the focused light cones 6 emerging from the second openings 10 in and near the center C of the radiating surface 4 propagate along or near the descent path 9 corresponding to the target landing approach path. Therefore, as long as the aircraft 12 continues its descent along the descent path 13 shown, which corresponds to the target landing approach path, the observer in the aircraft 12 continues to perceive the navigation light 6 of the ground-based visual landing aid 1 in and around the center C of the radiating surface 4 (see Fig. 3a).

When the VTOL aircraft 12 reaches a hover point 15 after completing the descent along the descent path 13, the VTOL aircraft 12 transitions from cruise flight to hover flight. The central landing point 16 of the landing site L is vertically aligned with the hover point 15, so that the VTOL aircraft 12 lands centrally on the landing site L after completion of the hover flight phase.

Thus, the position of the navigation light 6 along the radiating surface 4 provides a two-dimensional representation of the aircraft's actual approach angles in both planes (vertical and horizontal) that the observer (pilot) in the approaching aircraft can intuitively understand (without having to monitor and evaluate separate guidance systems) so that he or she can immediately initiate corrective navigation countermeasures if necessary.

### List of Reference Signs

1: visual landing aid; 2: light-emitting and/or light-reflecting element; 3: mechanical and/or optical structure; 4: radiating surface; 5: focused light cone; 6: navigation light; 7: light-guiding element; 8: light-guiding channel; 9: first opening; 10: second opening; 11: reference light; 12: VTOL aircraft; 13: descent path; 14: descent angle; 15: hover point; 16: landing point; C: center of radiating surface; L: landing site; R: row of light guiding channels; a: inclination of light guiding channel

## Claims

1. A visual landing aid (1) for an aircraft approaching a landing site (L), comprising at least one light-emitting and/or light-reflecting element (2) and a mechanical and/or optical structure (3) for directing the light emitted and/or reflected by the element (2) into a plurality of focused light cones (5) which are positioned next to each other in a grid-like manner along a radiating surface (4) of the mechanical and/or optical structure (3) and together form a navigation light (6), the focused light cones (5) forming the navigation light (6) changing for an observer in the aircraft as a function of a deviation of the aircraft from a target landing approach path.

2. The visual landing aid (1) according to claim 1, wherein the navigation light (6) for the observer in the aircraft is located in a center (C) of the radiating surface (4) when the aircraft is on the target landing approach path.

3. The visual landing aid (1) according to claim 2, wherein as the aircraft moves away from the target landing approach path, the position of the observed navigation light moves in the same direction.

4. The visual landing aid (1) according to claim 2 or 3, wherein the direction of deviation of the aircraft from the target landing approach path corresponds to a direction of displacement of the navigation light (6) from the center (C) of the radiating surface (4).

5. The visual landing aid (1) according to any one of claims 1 to 4, wherein the structure (3) comprises a plurality of light-guiding elements (7) arranged in a grid defining a plurality of adjacent light-guiding channels (8), wherein the light-guiding channels (8) each extend from a first opening (9) facing the element (2) to a second opening (10) at the radiating surface (4), and wherein the second openings (10) each emit a focused light cone (5) which is either perceivable or not perceivable for the observer in the aircraft, depending on a deviation of the aircraft from the target landing approach path.

6. The visual landing aid (1) according to claim 5, wherein the cross-section of the light-guiding channels (8) continuously increases from the first opening (9) to the second opening (10).

7. The visual landing aid (1) according to claim 5 or 6, wherein the structure (3) comprises a plurality of adjacent rows (R) of light-guiding channels (8), each row (R) in turn consisting of a plurality of adjacent light-guiding channels (8).

8. The visual landing aid (1) according to claim 7 wherein the light-guiding channels (8) within a row (R) have different inclinations (a) with respect to a plane perpendicular to the radiating surface (4).

9. The visual landing aid (1) according to claim 8, wherein within a row (R) the inclination (a) of the light-guiding channels (8) with respect to a plane perpendicular to the radiating surface (4) increases the further the light-guiding channel (8) is away from a center of the row (R).

10. The visual landing aid (1) according to any one of claims 1 to 9, wherein the structure (3) rests on the element (2).

11. The visual landing aid (1) according to any one of claims 1 to 10, wherein the radiating surface (4) has at its edge one or more reference lights (11) which radiate their light in all directions and are visible to the observer in the aircraft irrespective of a deviation of the aircraft from the target landing approach path.

12. The visual landing aid (1) according to claim 11, wherein the element (2) radiates light of a first color and the at least one reference light (11) radiates light of a second color different from the first color.

13. The visual landing aid (1) according to claim 11 or 12, wherein a plurality of reference lights (11) are provided radiating light in at least two different colors to indicate to the observer in the aircraft the orientation of the radiating surface (4).

14. The visual landing aid (1) according to any one of claims 11 to 13, wherein the radiating surface (4) is polygonal, in particular square, and a reference light (11) is provided at each of the corners of this radiating surface (4).
